# EUROPEAN PATENT APPLICATION

(11) **EP 1 591 031 A1**
(43) Date of publication of application: **02.11.2005**
(21) Application number: 04252413.2
(22) Date of filing: 26.04.2004
(51) Int. Cl.: A43B 5/02, A43B 5/00, B29D 31/508, B29D 31/51, A43B 13/32, A43B 9/12

(54) **Method for making a shoe**

(71) Applicant: Chi, Cheng-Hsian, Taichung City (TW)
(72) Inventor: Chi, Cheng-Hsian, Taichung City (TW)
(74) Representative: Lord, Hilton David

(57) **Abstract**

A method for making a shoe includes the steps of providing an upper (10, 50, 80) having a bottom end (15, 52), an outsole (21, 61, 81) made of a thermoplastic material, and a traction member (22, 60, 82); softening the outsole (21, 61, 81) by heating; arranging the outsole (21, 61, 81) between the upper (10, 50, 80) and the traction member (22, 60, 82); and pressing the upper (10, 50, 80) and the traction member (22, 60, 82) against the outsole (21, 61, 81) while the outsole (21, 61, 81) is in a softened state so as to bind the upper (10, 50, 80) and the traction member (22, 60, 82) to the outsole (21, 61, 81), thereby forming the shoe.

## Description

The invention relates to a method for making a shoe, more particularly to a method for making a shoe having a traction member.

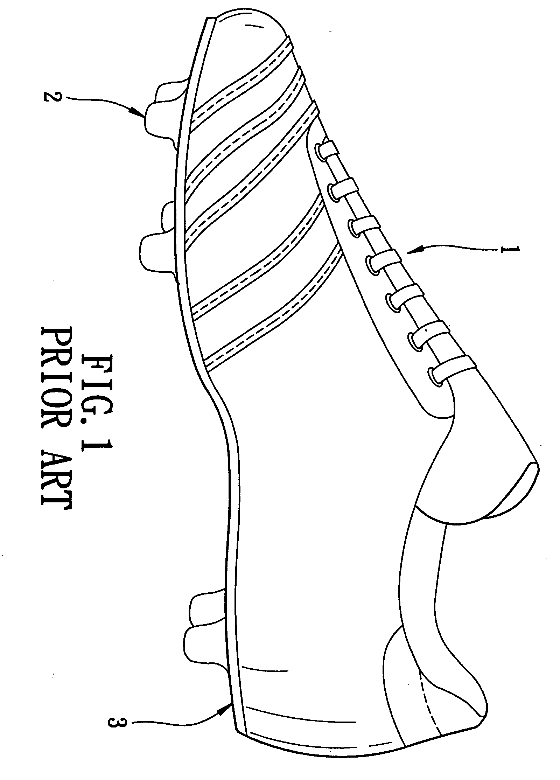

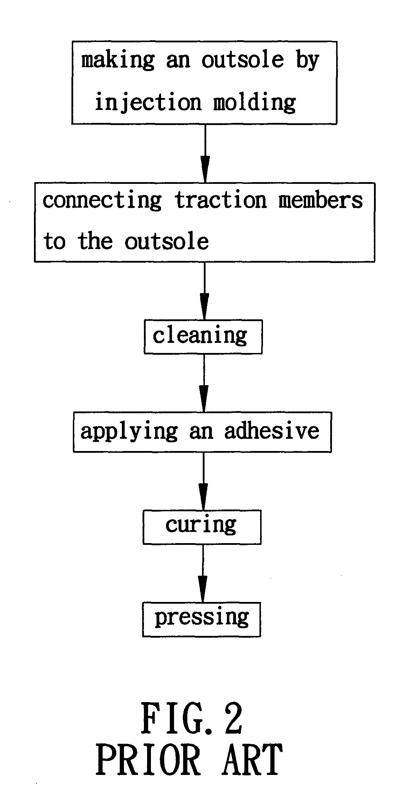

A conventional sports shoe is shown in Figure 1 to include an upper 1, an outsole 3 underlying the upper 1, and a plurality of traction members 2 mounted under the outsole 3. As shown in Figure 2, a conventional method for making the shoe of Figure 1 includes the steps of: making the outsole 3 by injection molding a polyvinyl chloride material; connecting the traction members 2 to the outsole 3 (alternatively, the outsole 3 and the traction members 2 can be made integrally by injection molding); cleaning a bottom surface of the upper 1 and a top surface of the outsole 3, and applying an adhesive thereon; curing the adhesive; and pressing the upper 1 against the outsole 3 using a pressing device so as to bind the upper 1 and the outsole 3, thereby forming the sports shoe.

Since the upper 1 and the outsole 3 are bound together solely by means of the adhesive, and since stress is localized at interconnected edges of the upper 1 and the outsole 3, a slit can form at the interconnected edges when the sports shoe is removed from the pressing device. Therefore, additional reinforcing processing is required, which in turn increases the production cost. Furthermore, since it is necessary to cure the adhesive before binding the upper 1 and the outsole 3 together, the aforesaid conventional method is time-consuming.

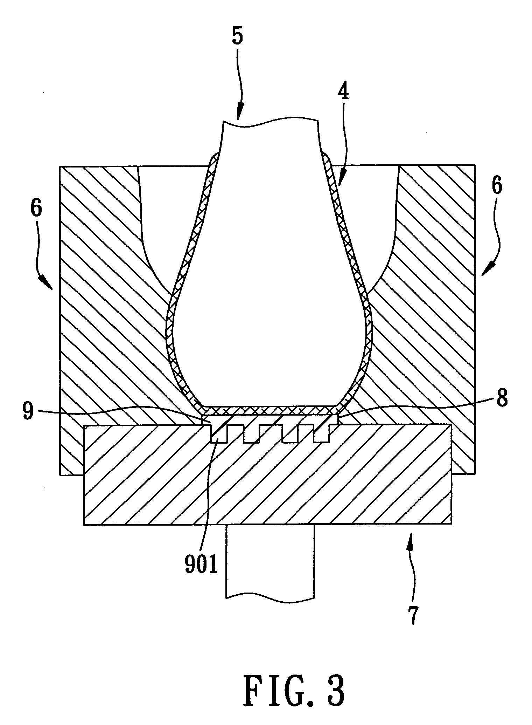

Referring to Figure 3, another conventional method for making a shoe is shown to include the steps of mounting an upper 4 on a last 5, providing a pair of side molds 6 to position the last 5, providing a lower mold 7 to support the side molds 6 and to cooperate with the last 5 and the side molds 6 to define a mold cavity 8, and injecting a thermoplastic material into the mold cavity 8 so as to form an outsole 9 attached securely to the upper 4. The outsole 9 is formed with a plurality of traction members 901.

Although the method of Figure 3 solves the aforesaid shortcomings of the prior art, the outsole 9 of the shoe made by injection molding is devoid of variation in color and in physical properties because only a single material can be used for the injection molding process.

Therefore, the object of the present invention is to provide a method for making a shoe having a traction member that can overcome the aforesaid shortcomings of the prior art.

Accordingly, the method for making a shoe of this invention includes the steps of: providing an upper having a bottom end, an outsole made of a thermoplastic material, and a traction meber; softening the outsole by heating; arranging the outsole between the upper and the traction member; and pressing the upper and the traction member against the outsole while the outsole is in a softened state so as to bind the upper and the traction member to the outsole, thereby forming the shoe.

Other features and advantages of the present invention will become apparent in the following detailed description of the preferred embodiments with reference to the accompanying drawings, of which:
Figure 1 illustrates a conventional sports shoe;
Figure 2 is a flow diagram showing consecutive steps of a conventional method for making the sports shoe of Figure 1;
Figure 3 is a sectional view to illustrate another conventional method for making a shoe;
Figure 4 is a flow diagram showing consecutive steps of the first preferred embodiment of a method for making a shoe according to this invention;
Figure 5 is an exploded perspective view of the shoe made according to the method of the first preferred embodiment;
Figure 6 is a sectional view to illustrate the method of the first preferred embodiment;
Figure 7 is a flow diagram showing consecutive steps of the second preferred embodiment of a method for making a shoe according to this invention;
Figure 8 is an exploded perspective view of the shoe made according to the method of the second preferred embodiment;
Figure 9 is a sectional view to illustrate the method of the second preferred embodiment; and
Figure 10 is a schematic partly sectional view of a shoe made according to the third preferred embodiment of a method for making a shoe of this invention.

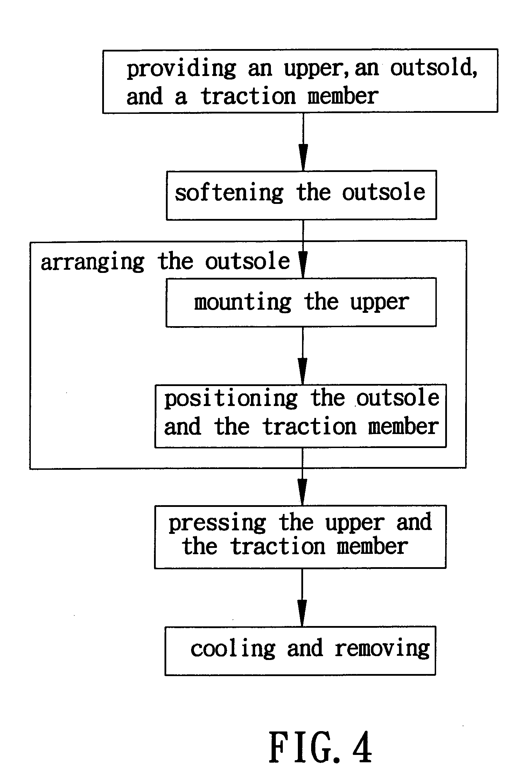

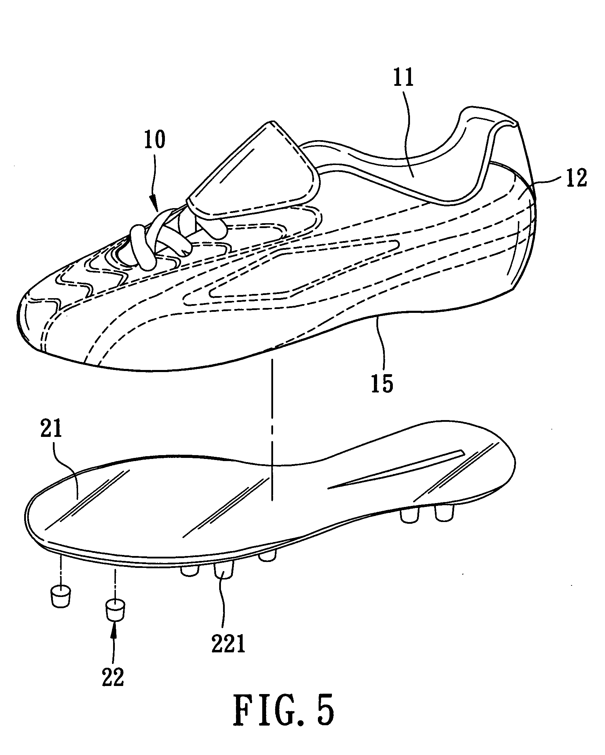

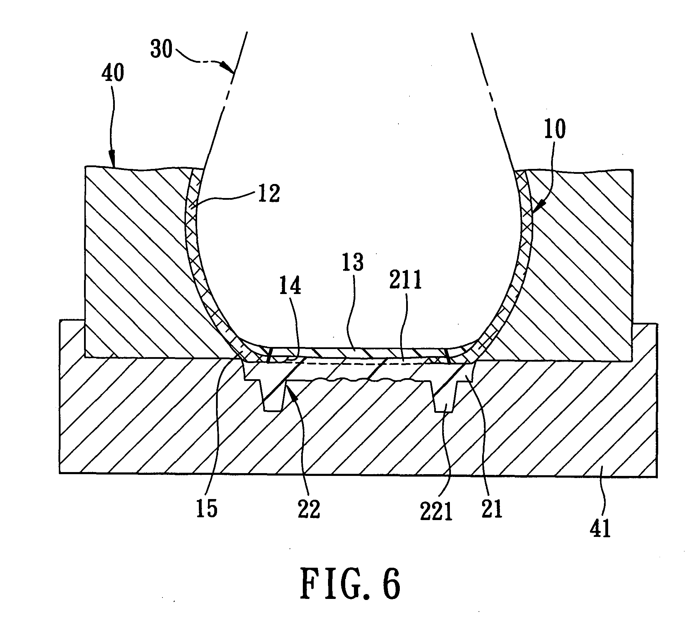

Referring to Figures 4, 5 and 6, the first preferred embodiment of the method for making a shoe according to this invention is shown to comprise the steps of:
1) providing an upper 10, an outsole 21, and a traction member 22:
   Referring to Figures 5 and 6, the upper 10 is made by sewing a plurality of sheets of materials, and includes a top opening 11, a vamp 12, a bottom end 15 having an opening 14, and an insole 13 attached to the bottom end 15 to cover the opening 14. The outsole 21 is made of a thermoplastic and water-resistant material, such as nylon, TPU (thermoplastic urethane elastomer), TPR (trans-1,5-polypentenamer rubber), NBR (nitrile-butadiene rubber), and the like, alone or in admixture. The traction member 22 includes a plurality of traction units 221. The outsole 21 is made by rolling and stamping, and has a thickness smaller than that of the traction member 22. Each of the traction units 221 can be made of any suitable material, such as metal, rubber, TPR, and the like, in a substantially inverted fructo-conical shape.
2) softening the outsole 21:
   The outsole 21 is softened by heating.
3) arranging the outsole 21:
   The outsole 21 is arranged between the upper 10 and the traction member 22. In this step, the upper 10 is mounted on a last 30, and an adhesive layer is applied to the bottom surface of the insole 13. The adhesive layer is a layer of thermal active glue. Thereafter, the outsole 21 and the traction member 22 are positioned on a lower mold 41 of a mold device 40. The traction member 22 can be preheated before being positioned on the lower mold 41, if desired.
4) pressing the upper 10 and the traction member 22:
   Referring to Figure 6, the last 30 and the lower mold 41 are moved toward each other to press the upper 10 and the traction member 22 against the outsole 21 while the outsole 21 is in a softened state so as to bind the upper 10 and the traction member 22 to the outsole 21, thereby forming the shoe. Preferably, the mold device 40 is heated during the pressing operation so as to enhance the binding effect. The material of the outsole 21 extends into the opening 14 of the upper 10 after the outsole 21 is softened and pressed by the upper 10 and the traction member 22 so as to form a protruding portion 211 received in the opening 14. Therefore, the upper 10 and the traction member 22 can be bound firmly to the outsole 21.
5) cooling and removing:
   The shoe is cooled and removed from the mold device 40, and the shoe is finished by trimming to obtain the shoe product.

In the first preferred embodiment, the traction member 22 may be different from the outsole 21 in material and color. However, the traction member 22 is preferably identical to the outsole 21 in material so as to enhance the binding effect therebetween.

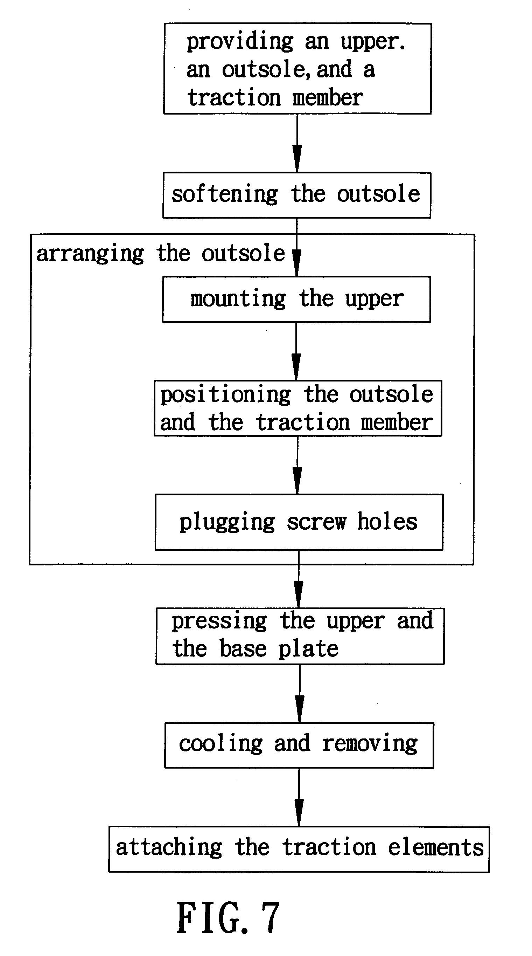

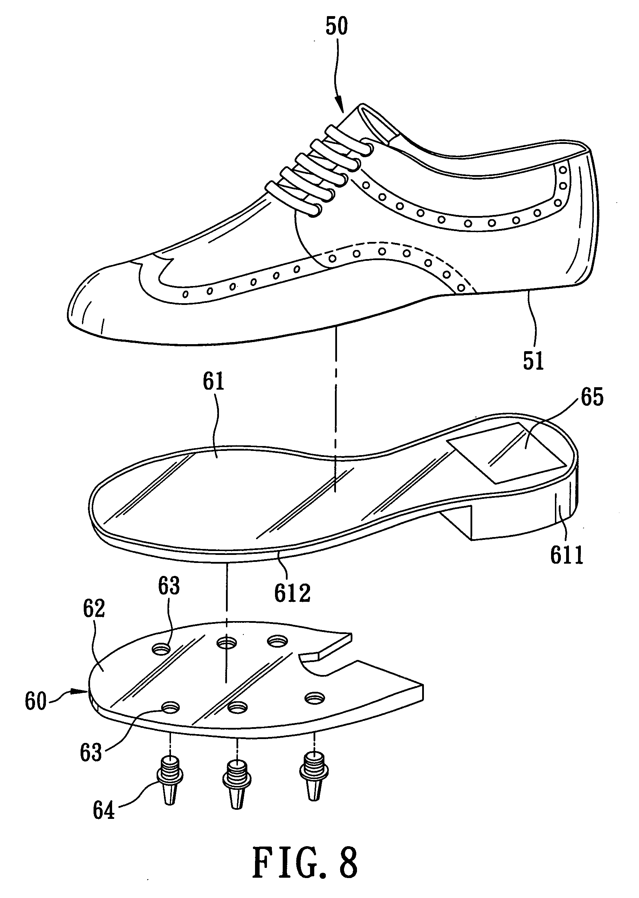

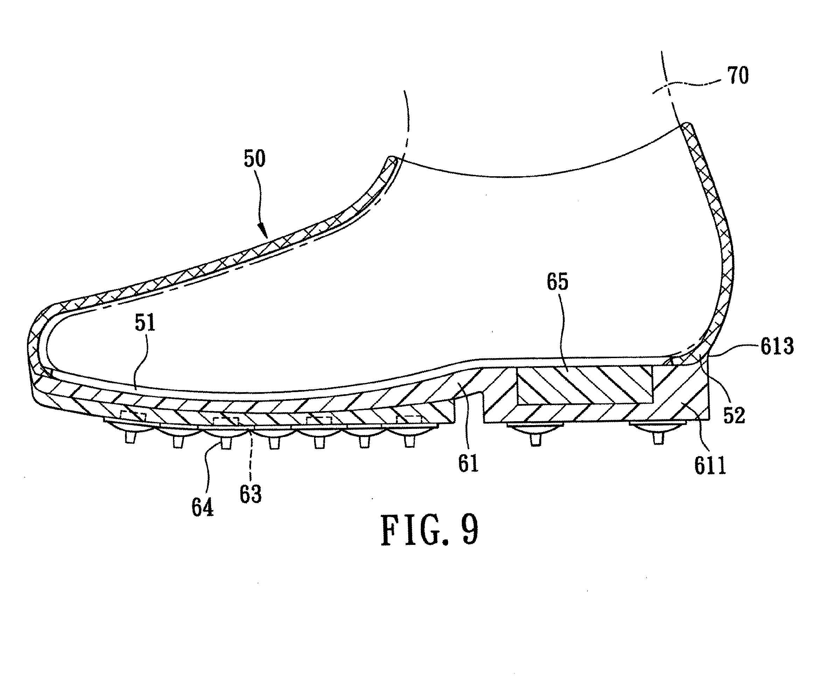

Referring to Figures 7 and 8, the second preferred embodiment of the method for making a shoe according to this invention is shown to comprise the steps of:
1) providing an upper 50, an outsole 61, and a traction member 60:
   Referring to Figure 8, the upper 50 includes an insole 51. The outsole 61 is made of a thermoplastic and water-resistant material, and has a heel region 611 and a front region 612. The traction member 60 includes a base plate 62, a plurality of screw holes 63 formed in the base plate 62, and a plurality of traction elements 64 to engage threadedly and respectively the screw holes 63. The base plate 62 can be different from the outsole 61 in material and in color. The outsole 61 further includes a shock absorbing member 65 embedded in the heel region 611. The shock absorbing member 65 is made of a shock absorbing material softer than the outsole 61. The shock aborbing member 65 may be mounted on other portions of the outsole 61, if desired.
2) softening the outsole 61:
   The outsole 61 is softened by heating.
3) arranging the outsole 61:
   The outsole 61 is arranged between the upper 50 and the base plate 62 of the traction member 60. In this step, referring to Figure 9, the upper 50 is mounted on a last 70, and an adhesive layer is applied to the bottom surface of the insole 51. Thereafter, the outsole 61 and the base plate 62 are positioned on a lower mold of a mold device (not shown) . The base plate 62 can be preheated before being positioned on the lower mold, if desired. Subsequently, the screw holes 63 are plugged so as to prevent the material of the outsole 61 from entering into the screw holes 63 during the following pressing process.
4) pressing the upper 50 and the base plate 62 of the traction member 60:
   The upper 10 and the base plate 62 of the traction member 60 are pressed against the outsole 61 while the outsole 61 is in a softened state so as to bind the upper 10 and the base plate 62 of the traction member 60 to the outsole 61. In the second preferred embodiment, the base plate 62 is attached to the front region 612 of the outsole 61. The base plate 62 of the traction member 60 and the outsole 61 can be different from each other in material and in color, if desired. The material of the outsole 61 extends to form an edge portion 613 covering the bottom end 52 of the upper 50 so as to enhance the binding effect.
5) cooling and removing:
   The shoe is cooled and removed from the mold device, and the shoe is finished by trimming.
6) attaching the traction elements 64:
   The screw holes 63 are unplugged, and the traction elements 64 are attached respectively to the screw holes 63 by threaded engagement.

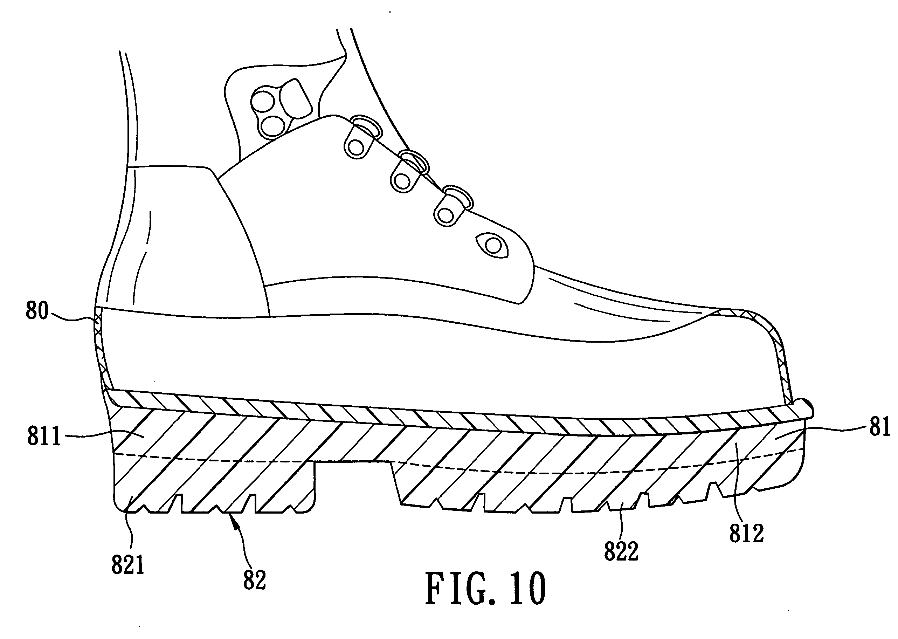

Refering to Figure 10, the third preferred embodiment of the invention is substantially identical to the first preferred embodiment except for the following:

The shoe includes an upper 80, an outsole 81, and a traction member 82. The outsole 81 has a rear region 811 and a front region 812. The traction member 82 includes a rear portion 821 and a front portion 822 attached to the rear region 811 and the front region 812 of the outsole 81, respectively. The rear and front portions 821,822 of the traction member 82 are different from each other in material and in color. In the third preferred embodiment, the rear portion 821 of the traction member 82 is softer than the front portion 822 of the traction member 82.

In view of the aforesaid, the method for making a shoe according to this invention has the following advantages:
1) The upper 10,50,80 and the traction member 22,60,82 are bound together through the outsole 21,61,81. Therefore, the binding effect is improved. Furthermore, it is not necessary to take time for curing the adhesive as required in the prior art.
2) Since the outsole 21,61,81 and the traction member 22,60,82 can be different from each other in material and in color, a wide variety of shoes can be fabricated as desired.

## Claims

1. A method for making a shoe, **characterized by** the steps of:
a) providing an upper (10, 50, 80) having a bottom end (15,52), an outsole (21, 61, 81) made of a thermoplastic material, and a traction member (22,60,82);
b) softening said outsole (21,61,81) by heating;
c) arranging said outsole (21,61,81) between said upper (10, 50, 80) and said traction member (22, 60, 82) ; and
d) pressing said upper (10, 50, 80) and said traction member (22,60,82) against said outsole (21,61,81) while said outsole (21,61,81) is in a softened state so as to bind said upper (10,50,80) and said traction member (22,60,82) to said outsole (21,61,81), thereby forming said shoe.

2. The method as claimed in Claim 1, **characterized in that** step c) includes:
e) mounting said upper (10) on a last (30); and
f) positioning said outsole (21) and said traction member (22) on a lower mold (41); and
further **characterized in that** step d) includes:
g) moving said last (10) and said lower mold (41) toward each other to press said upper (10) and said traction member (22) against said outsole (21).

3. The method as claimed in Claim 1, further **characterized by** a step of applying an adhesive layer to said bottom end (15, 52) of said upper (10 , 50) prior to step d).

4. The method as claimed in Claim 1, further **characterized by** a step of cooling and removing said shoe after step d).

5. The method as claimed in Claim 1, **characterized in that** said traction member (22,60,82) is different from said outsole (21,61,81) in material and in color.

6. The method as claimed in Claim 1, **characterized in that** said traction member (60) includes a base plate (62), a plurality of screw holes (63) formed in said base plate (62), and a plurality of traction elements (63) to engage threadedly and respectively said screw holes (63).

7. The method as claimed in Claim 6, further **characterized in that** step c) includes:
h) mounting said upper (50) on a last (70);
i) positioning said outsole (61) and said base plate (62) in a lower mold; and
j) plugging said screw holes (63) so as to prevent the material of said outsole from entering into said screw holes (63).

8. The method as claimed in Claim 7, further **characterized by**, after step d) the step of : unplugging said screw holes (63); and attaching said traction elements (64) to said screw holes (63).

9. The method as claimed in Claim 1, **characterized in that** said outsole (61) includes a heel region (611) and a shock absorbing member (65) embedded in said heel region (611).

10. The method as claimed in Claim 7, **characterized in that** said outsole (61) has a heel region (611) and a front region (612), said base plate (62) being attached to said front region (612), said base plate (62) and said outsole (61) being different from each other in material and in color.

11. The method as claimed in Claim 1, **characterized in that** said outsole (81) has a rear region (811) and a front region (812), said traction member (82) including a rear portion (821) and a front portion (822) attached to said rear region (811) and said front region (812) of said outsole (81), respectively, said rear and front portions (821,822) of said traction member (82) being different from each other in material and in color.
